# EUROPÄISCHE PATENTSCHRIFT

(11) **EP 0 893 371 B1**
(45) Veröffentlichungstag und Bekanntmachung des Hinweises auf die Patenterteilung: **26.07.2000**
(21) Anmeldenummer: 98109930.2
(22) Anmeldetag: 30.05.1998
(51) Int. Cl.: B65G 15/58, B65G 17/32

(54) **Fördergurt für den Transport von Werkstücken**
Conveyor belt for tranporting workpieces
Bande transporteuse pour le transport de pièces

(30) Priorität: 24.07.1997 DE 19731902
(43) Veröffentlichungstag der Anmeldung: 27.01.1999
(73) Patentinhaber: Neuhäuser GMBH + CO., D-44532 Lünen (DE)
(72) Erfinder: Janzen, Klaus, 44534 Lünen (DE)
(74) Vertreter: Nunnenkamp, Jörg, Dr.

(56) Entgegenhaltungen:
- EP-A- 0 613 844
- DE-A- 3 001 531
- DE-A- 4 102 130
- DE-C- 19 614 741

## Beschreibung

Die Erfindung betrifft einen Fördergurt für den Transport von Werkstücken, insbesondere für den hängenden Transport von tafelförmigen Werkstücken wie Blechen oder Platten, mit einem Gurtkörper mit Ansaugöffnungen, welche mit einem Unterdruckkanal in einer Unterdruckvorrichtung in Verbindung stehen, wobei der Fördergurt mit den hieran anzulegenden Werkstücken in Anlage an der Unterdruckvorrichtung in Transport(ebenen)richtung vorbeigeführt und die Werkstücke durch Erzeugung von Unterdruck in dem Unterdruckkanal und damit an den Ansaugöffnungen am Fördergurt festgehalten werden, und mit zwei oder mehr an den Gurtkörper angeformten rückseitigen Dichtlippen, wobei die beiden Dichtlippen zur Abdichtung des Unterdruckkanals in zumindest einen Dichtspalt in der Unterdruckvorrichtung eingreifen. - Neben einem hängenden ist selbstverständlich auch ein aufliegender und sogar vertikaler Transport möglich.

Ein Fördergurt der eingangs beschriebenen Ausführungsform ist durch die DE 196 14 741 C1 bekannt geworden. Dieser Fördergurt wird in Verbindung mit einem kombinierten Vakuum-Magnet-System eingesetzt. Er dient folglich sowohl zum Transport von ferromagnetischen Werkstücken (mittels eines Magnet-Systems) als auch von nicht ferromagnetischen Werkstücken (mittels des Vakuum-Systems). Diese kombinierte Betriebsweise bedingt normalerweise, daß bei dem bekannten Fördergurt Kompromisse bei seiner Auslegung gemacht werden. Hierzu können eine verringerte Ansaugleistung gehören, welche sich auf den Einsatz von Flachdichtungen zurückführen läßt. Auch können Leckagen bei dem bekannten Fördergurt nicht ausgeschlossen werden. Hinzu kommt, daß verbogene oder verbeulte Bleche oder Platten nicht immer hinreichend festgehalten werden. Denn die frontseitigen Saugausformungen sind kaum in der Lage, sich an die Kontur eines stärker gekrümmten Werkstückes anpassen zu können.

Unabhängig hiervon ist durch die deutsche Offenlegungsschrift 30 01 531 ein Fördergurt mit in eine Kernschicht aus Gummi oder gummiähnlichen Kunststoffen eingebetteten textilen oder metallischen Festigkeitsträgern bekannt geworden. Zusätzlich finden sich Erhebungen auf einer Deckplatte, welche zum Teil als Saugausformungen dienen. Die Probleme um die Beseitigung von Leckagen sowie eine der Werkstückkontur angepaßte Ansaugung werden nicht angesprochen.

Schließlich wird in der DE-A 41 02 130 eine Zweilippen-Dichtung offenbart, bei der bei gleicher unveränderter Dichtung der Abstand radialer und axialer Ringflächen zu den Dichtlippen größer ist als 0, gleich 0 oder kleiner als 0 unter Einbeziehung von Mischsystemen davon. Auf diese Weise sollen mit Hilfe einfachster Mittel verschiedene Dichtungsverhältnisse (gleitende Dichtung, Labyrinth-Dichtung bzw. Mischsysteme davon) bei einer Zweilippen-Dichtung beherrscht werden können.

Der Erfindung liegt die Aufgabe zugrunde, einen gattungsgemäßen Fördergurt so weiter zu bilden, daß Leckagen minimiert sind und gleichzeitig eine optimale Anpassung des Fördergurtes an die Werkstückkontur ermöglicht wird.

zur Lösung dieser Aufgabe schlägt die Erfindung bei einem gattungsgemäßen Fördergurt für den Transport von Werkstücken vor, daß für jede Dichtlippe ein eigener Dichtspalt in der Unterdruckvorrichtung vorgesehen ist, und daß die Dichtlippen, sich selbst zentrierend unter gleichzeitiger Abdichtung des Unterdruckkanals, in den Dichtspalten unter Vorspannung gehalten sind. Nach bevorzugter Ausführungsform sind die beiden Dichtlippen in bezug auf die Ansaugöffnungen gegenüberliegend mit jeweils einwärts gerichteten Dichtzähnen ausgebildet, wobei die Dichtzähne jeweils in korrespondierende Einfasungen im Dichtspalt eingreifen. Ferner weist jeder Dichtzahn üblicherweise zwei als Dichtkante und Abschlußkante ausgebildete Zahnkanten auf, welche einen spitzen Winkel zwischen sich einschließen, wobei die Dichtkante mit vorgegebenem Winkel gegenüber der Transportebenenrichtung an einer Dichtfasungskante der Einfasung anliegt, welche ebenfalls eine vorgegebene Neigung gegenüber der Transportebenenrichtung aufweist.

Der spitze Winkel zwischen Dichtkante und Abschlußkante bewegt sich im Bereich von ca. 20° bis 60°. Für die Dichtkante hat sich ein Winkelbereich von ca. 20° bis ca. 60° als Neigungswinkel gegenüber der Transportebenenrichtung als günstig erwiesen. Der Neigungswinkel der Dichtfasungskante gegenüber der Transportebenenrichtung (regelmäßig der Horizontalen) bewegt sich im Bereich von ca. 30° bis ca. 80°. Diese Winkelangaben beziehen sich auf den jeweils nicht eingebauten Zustand. - Neben einem hängenden Transport von Werkstücken ist selbstverständlich auch ein aufliegender Transport möglich. Die Dichtlippen erstrecken sich in der Regel längs des gesamten Fördergurtes. Selbstverständlich können neben den beiden obligatorischen Dichtlippen zusätzliche Dichtlippen vorgesehen sein, so daß der Fördergurt insgesamt 2, 3, 4, oder mehr Dichtlippen aufweist.

Jedenfalls werden durch diese Maßnahmen insgesamt besonders Leckagen des Unterdruckkanals vermieden. Denn der Fördergurt wird einwandfrei an der Unterdruckvorrichtung gehalten und an dieser entlanggeführt und an dieser entlanggeführt, ohne daß Unterdruck zwischen Fördergurt und zugehöriger Kontaktfläche der Unterdruckvorrichtung entweichen kann bzw. an dieser Stelle zusammenbricht. Hierfür sorgen insbesondere die Dichtzähne, welche unter Vorspannung in die korrespondierenden Einfasungen eingreifen. Durch die Vorspannung werden die Dichtzähne in den Dichtspalten - im Querschnitt - gleichsam auseinandergedrückt, so daß sich die Dichtkante an die Dichtfasungskante der Einfasung anschmiegt. Jedenfalls erfolgt in dem Kontaktbereich zwischen Dichtkante und Dichtfasungskante eine gleitende Anlage der Dichtkante an die Dichtfasungskante, und zwar über einen relativ großen Bereich. Gleichzeitig wird hierdurch erreicht, daß die beiden Dichtzähne praktisch (nach oben) verschwenkt werden und in Folge der insgesamt elastischen Auslegung des Fördergurtes auf diese Weise der Gurtkörper gegen die Unterdruckvorrichtung angedrückt wird.

Neben diesen Maßnahmen, die insbesondere Leckagen verhindern, ist weiter bevorzugt beabsichtigt, daß frontseitige Saugausformungen vorgesehen sind, in welche die Ansaugöffnungen münden.Bei diesen Saugausformungen kann es sich um Saugnäpfe mit innenseitigen Noppen handeln. Derartige Saugnäpfe lassen sich (innerhalb eines gewissen Winkelbereiches) problemlos hin- und herschwenken, so daß auf diese Weise eine Anpassung an die Werkstückkontur ohne Leckageverlust möglich ist. Hinzu kommt, daß die Noppen in der Regel zur Begrenzung des Federweges des Saugnapfes eingerichtet sind. Folglich sorgen die Noppen dafür, daß sich die Saugnäpfe beim Ansaugen eines Werkstückes kontrolliert und elastisch rückstellbar verformen. Hierdurch werden nochmals mögliche Leckageverluste verringert. Insgesamt ist eine einwandfreie Unterdruckbeaufschlagung der anzusaugenden Werkstücke gewährleistet, wobei gleichzeitig eine Anpassung an deren Kontur erfolgt. Dies ist insofern von besonderer Bedeutung, als die zu transportierenden tafelförmigen Werkstücke wie Bleche oder Platten regelmäßig von einer Zuführfördereinrichtung übernommen werden. Darüber hinaus werden die Energiekosten deutlich reduziert, da die kostspielige Unterdruckerzeugung mit geringerem Unterdruckvolumenstrom arbeiten kann.

Weitere Ausgestaltungen sind im folgenden aufgeführt. So beträgt der spitze Winkel zwischen Dichtkante und Abschlußkante in der Regel ca. 30°. Die Dichtzähne sind im allgemeinen jeweils kopfseitig an einen auf dem Gurtkörper rückseitig aufstehenden Dichtsteg angeformt. Dieser Dichtsteg erstreckt sich im allgemeinen senkrecht im Vergleich zum Gurtkörper. In der Regel wird man die Dichtlippen als an den Gurtkörper angeformtes U-Profil ausbilden, wobei jeder Dichtsteg zusammen mit dem kopfseitigen Dichtzahn einen U-Schenkel bildet, und wobei die beiden Dichtstege fußseitig unter Bildung einer U-Basis mittels eines Auflagesteges verbunden sind. Auf diese Weise lassen sich die Dichtlippen als einteiliges Bauteil am Gurtkörper anformen. Der Auflagesteg liegt dabei auf dem Gurtkörper auf und sorgt für eine entsprechende Verbindung. Er weist im allgemeinen zumindest eine mittige Durchtrittsöffnung auf, welche konzentrisch im Vergleich zur korrespondierenden Ansaugöffnung im Gurtkörper angeordnet ist, wobei die Dichtstege mit den Dichtzähnen im Vergleich zu der Durchtrittsöffnung und der Ansaugöffnung spiegelsymmetrisch angeordnet sind. Hauptsächlich wird man für jede Ansaugöffnung eine korrespondierende Durchtrittsöffnung vorsehen. Dabei bewegen sich die Ansaugöffnungen und die Durchtrittsöffnungen im Zuge eines Umlaufens des Fördergurtes regelmäßig jeweils auf einer Längserstreckungsebene des Unterdruckkanals. Dies ist eine Folge der sich selbst zentrierenden Ausrichtung des Fördergurtes durch die Dichtlippen und der insgesamt spiegel-symmetrischen Auslegung des Fördergurtes. Das heißt, auf diese Weise ist gewährleistet, daß die Ansaugöffnungen jeweils mit dem Unterdruckkanal einen maximalen Überlapp bilden. Folglich sind Taktzeiten auf ein Minimum reduzierbar. In die gleiche Richtung zielen auch die Maßnahmen, wonach die Saugnäpfe Unterdruckfortsatzöffnungen für die Ansaugöffnungen aufweisen. Diese Unterdruckfortsatzöffnungen weisen im allgemeinen einen T-förmigen Querschnitt auf.

Der Gurtkörper kann im wesentlichen aus PUR (Polyurethan) mit einer Shorehärte von ca. 90 gefertigt sein. Für die Herstellung der Dichtlippen und der Saugnäpfe mit Noppen setzt man größtenteils PUR mit einer Shorehärte von ca. 55 ein. Bei der vorerwähnten Shorehärte handelt es sich um die sogenannte Shorehärte A. Bekanntermaßen läßt sich mit Polyurethan (PUR) bzw. PUR-Kautschuk eine Shore-A-Härte im Bereich zwischen 50 bis 98 einstellen, so daß die vorerwähnten Bereiche problemlos realisierbar sind. Jedenfalls wird hierdurch erreicht, daß die Saugnäpfe mit Noppen insgesamt deutlich weicher als der Gurtkörper ausgelegt sind. Folglich können sie sich problemlos der Kontur des Werkstückes anpassen. Vergleichbares gilt für die Dichtlippen, welche durch ihre relativ weiche Abstimmung eine hervorragende Dichtigkeit gewährleisten.

Der größtenteils aus (hartem) PUR bestehende Gurtkörper kann zusätzlich eine Polyamid (PA)-Beschichtung zur Reibwertverminderung auf seiner der Unterdruckvorrichtung zugewandten Rückseite im Bereich einer Kontaktfläche mit der Unterdruckvorrichtung aufweisen. Auf diese Weise lassen sich die Reibwerte mehr als halbieren. Tatsächlich stellen sich für eine Reibung PUR auf Eisen bzw. Stahl Reibwerte im Bereich von 0,5 ein, während die PA-Beschichtung zu Reibwerten im Bereich von 0,2 führt. Zur Stabilisierung des Gurtkörpers in Längsrichtung können in diesen zusätzlich Stahllitzen eingebracht werden. Außerdem weist der Gurtkörper bevorzugt eingebrachte Querversteifungen und gegebenenfalls ferromagnetische Einlagen auf. Letztere dienen dazu, aufgebrachte Magnetfeldkräfte zu verstärken.

Derartiges kann beispielsweise für den Fall gefordert sein, daß der erfindungsgemäße Fördergurt mit einer Unterdruckvorrichtung mit zusätzlicher Magnetvorrichtung kombiniert wird. Eine solche Kombination wird beispielsweise in der eingangs bereits beschriebenen DE-PS 196 14 741 angesprochen.

Endlich ist weiter bevorzugt vorgesehen, daß der Gurtkörper, die als U-Profil ausgebildeten Dichtlippen und die Saugnäpfe jeweils durch (Kunststoff-)Schweißverbindungen miteinander verbunden sind. Hierdurch wird eine rationelle Fertigung erreicht. Denn nun können die jeweils drei zusammenzusetzenden Bauteile: Gurtkörper, Dichtlippen und Saugnäpfe vorgefertigt und anschließend zu dem erfindungsgemäßen Fördergurt zusammengesetzt werden.

Im folgenden wird die Erfindung anhand einer lediglich ein Ausführungsbeispiel darstellenden Zeichnung näher erläutert; es zeigen:
- Fig. 1: Den Fördergurt in Verbindung mit einer Unterdruckvorrichtung,
- Fig. 2: den Fördergurt nach Fig. 1 in vergrößerter Darstellung zusammen mit einem vergrößertem Ausschnitt aus Fig. 1 und
- Fig. 3: eine Ansicht auf den Fördergurt nach Fig. 2 in Richtung des Pfeils A.

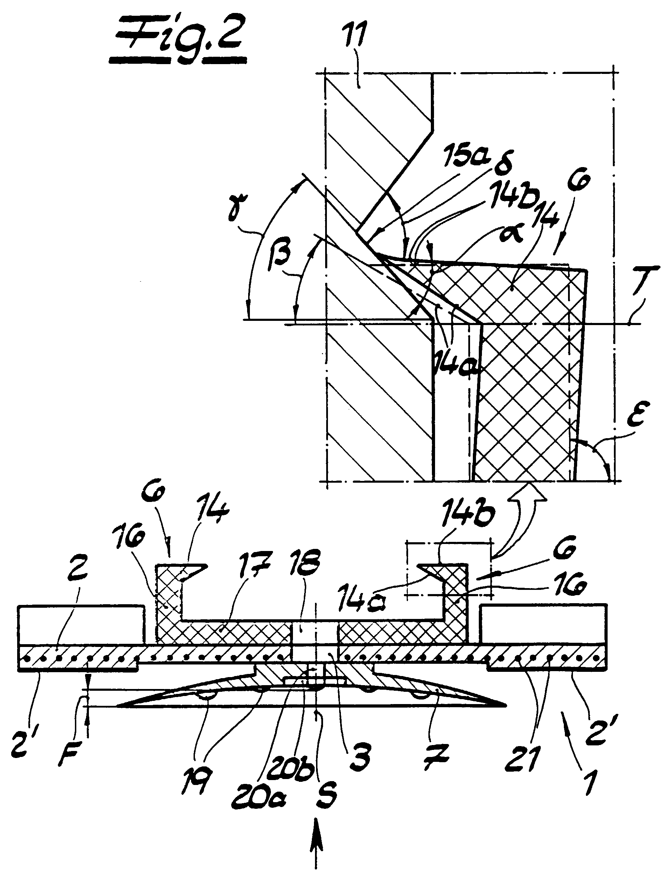

In den Figuren ist ein Fördergurt 1, insbesondere Unterdruckfördergurt 1 für den hängenden Transport von Werkstücken, insbesondere von tafelförmigen Werkstücken wie Blechen oder Platten, gezeigt. Dieser Fördergurt 1 weist ausweislich der Fig. 2 in seinem grundsätzlichen Aufbau einen Gurtkörper 2 mit Ansaugöffnungen 3 auf. Die Ansaugöffnungen 3 stehen mit einem Unterdruckkanal 4 in einer Unterdruckvorrichtung 5 in Verbindung. Der Fördergurt 1 wird umlaufend angetrieben und mit den hieran anzulegenden Werkstücken in Anlage an der Unterdruckvorrichtung 5 in Transport (ebenen) richtung vorbeigeführt. Die Werkstücke werden durch Erzeugen von Unterdruck in dem Unterdruckkanal 4 und damit an den Ansaugöffnungen 3 am Fördergurt 1 festgehalten. Zusätzlich weist der Fördergurt 1 zwei oder mehr an den Gurtkörper 2 angeformte rückseitige Dichtlippen 6 auf. Endlich sind frontseitige Saugausformungen 7 vorgesehen, in welche die Ansaugöffnungen 3 münden.

Der Unterdruckkanal 4 erstreckt sich in Längsrichtung der Unterdruckvorrichtung 5. Er wird mittels Saugbohrungen 8 beaufschlagt, welche mit dem Unterdruckkanal 4 verbunden sind. Die beiden Dichtlippen 6 greifen zur Abdichtung des Unterdruckkanals 4 in zumindest einen Dichtspalt 9 in der Unterdruckvorrichtung 5 ein. Im Ausführungsbeispiel ist für jede Dichtlippe 6 ein eigener Dichtspalt 9a, 9b in der Unterdruckvorrichtung 5 vorgesehen. Die Unterdruckvorrichtung 5 weist im Querschnitt einen zwischen zumindest zwei sich gegenüberliegenden Zentrierbacken 10 unter Bildung des jeweiligen Dichtspaltes 9a, 9b angeordneten Führungskörper 11 auf. Beidseitig des Führungskörpers 11 sind im Querschnitt zwischen Führungskörper 11 und jeweiliger Zentrierbacke 10 unter Einstellung des jeweiligen Dichtspaltes 9a, 9b elastisch komprimierbare Schaumstoffzentrierkörper 12 zur zentrischen Halterung des Führungskörpers 11 zwischen den Zentrierbacken 10 vorgesehen. Zusätzlich finden sich außenseitig an die Zentrierbacken 10 angeflanschte Winkel 13, welche die Zentrierbacken 10 transportseitig unter gleichzeitiger Führung des an den Zentrierbacken 10 und am Führungsstück 11 anliegenden Fördergurtes 1 untergreifen. Diese Winkel 13 dienen sowohl zur Führung des Fördergurtes 1 als auch zu dessen Schutz.

Der Führungskörper 11 wird mit Hilfe der Schaumstoffzentrierkörper 12 zwischen den Zentrierbacken 10 unter Bildung gleichgroßer Dichtspalte 9a, 9b ausgerichtet. Auf diese Weise wird erreicht, daß die Dichtlippen 6, sich selbst zentrierend unter gleichzeitiger Abdichtung des Unterdruckkanals 4, in den Dichtspalten 9a, 9b unter Vorspannung gehalten sind. Im einzelnen sind hierzu die beiden Dichtlippen 6 in bezug auf die Ansaugöffnungen 3 gegenüberliegend mit jeweils einwärts gerichteten Dichtzähnen 14 ausgebildet. Diese Dichtzähne 14 greifen jeweils in korrespondierende Einfasungen 15 im Dichtspalt 9a, 9b ein. Jeder Dichtzahn 14 weist zwei als Dichtkante 14a und Abschlußkante 14b ausgebildete Zahnkanten 14a, 14b auf, welche einen spitzen Winkel α zwischen sich einschließen (vgl. Fig. 2). Die Dichtkante 14a liegt darüber hinaus mit vorgegebenem Winkel β gegenüber der Transportebenenrichtung T, regelmäßig der Horizontalen, an einer Dichtfasungskante 15a der Einfasung 15 an. Diese Dichtfasungskante 15a weist ebenfalls eine vorgegebene Neigung γ gegenüber der Transportebenrichtung T auf. Diese einzelnen geometrischen Verhältnisse sind insbesondere in Fig. 2 dargestellt. Die Winkel α und β betragen jeweils ca. 20° bis 60°, bevorzugt 30°.γ bewegt sich im Bereich zwischen 30° und 80° und beträgt bevorzugt ca. 50°. Dies gilt jeweils für den nicht eingebauten Zustand. Hier weisen die Dichtlippen 6 eine Vorspannung auf (gestrichelte Darstellung in Fig. 2). Der Öffnungswinkel δ der Einfasung 15 beträgt ca. 90° bis 120°. Der Neigungswinkel ε, welcher gleichsam die Vorspannung darstellt, liegt im Bereich zwischen ca. 85° bis 95°. Der nicht näher spezifizierte Winkel zwischen Dichtkante 33a und Dichtfasungskante 34a beträgt ca. 15° bis 30°.

Hierdurch wird insgesamt erreicht, daß sich die unter Vorspannung stehende Dichtlippe 6 beim Einsetzen in die Dichtspalte 9a, 9b so verformt, wie dies in Fig. 2 im Ausschnitt angedeutet ist (durchgezogene Darstellung). Die solchermaßen gezeigte "Schwenkbewegung" der Dichtzähne 14 hat zur Folge, daß die Dichtkante 14a mit einer relativ großen Kontaktfläche an der Dichtfasungskante 15a anliegt. Auf diese Weise wird insgesamt die Abdichtung des Dichtspaltes 9a, 9b optimiert. Außerdem wird erreicht, daß sich die Dichtlippen 6, die allgemein als U-Profil ausgebildet sind, mit ihrer U-Basis besonders eng an den Führungskörper 11 anlegen. Folglich wird nicht nur eine Selbstzentrierung der Dichtlippen 6 erreicht, sondern gleichzeitig auch eine zuverlässige Abdichtung des Unterdruckkanals 4.

Der spitze Winkel α beträgt nach dem Ausführungsbeispiel ca. 30°. Die Winkel β, γ weisen folgende Größe auf: β ca. 30° und γ ca. 50°. Die Dichtzähne 14 sind jeweils kopfseitig an einen auf dem Gurtkörper 2 rückseitig aufstehenden Dichtsteg 16 angeformt. Dieser Dichtsteg 16 ist regelmäßig in senkrechter Erstreckung auf dem Gurtkörper 2 angeordnet. Wie bereits ausgeführt, sind die Dichtlippen 6 als an den Gurtkörper 2 angeformtes U-Profil ausgebildet, wobei jeder Dichtsteg 16 zusammen mit dem kopfseitigen Dichtzahn 14 einen U-Schenkel bildet, und wobei die beiden Dichtstege 16 fußseitig unter Bildung einer U-Basis mittels eines Auflagesteges 17 verbunden sind. Dieser Auflagesteg 17 sorgt darüber hinaus für eine Verbindung der Dichtlippen 6 mit dem Gurtkörper 2.

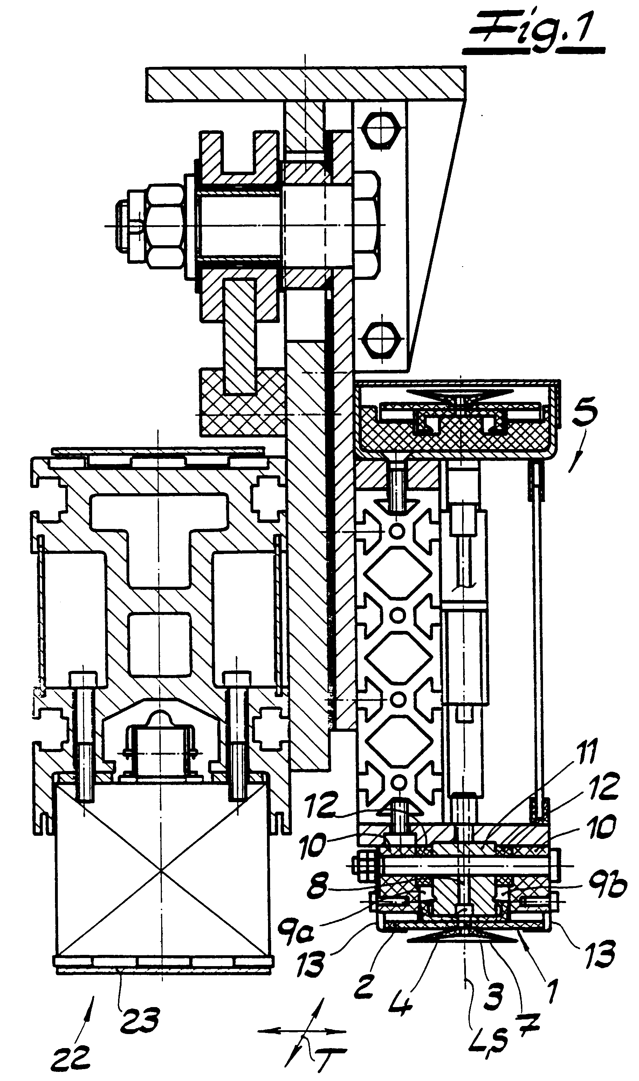

Der Auflegesteg 17 weist zumindest eine mittige Durchtrittsöffnung 18 auf, welche konzentrisch im Vergleich zur korrespondierenden Ansaugöffnung 3 im Gurtkörper 2 angeordnet ist. Die Dichtstege 16 sind ausweislich der Fig. 2 mit ihren Dichtzähnen 14 im Vergleich zu der Durchtrittsöffnung 18 und der Ansaugöffnung 3 spiegelsymmetrisch im Vergleich zu einer Spiegelachse 5 angeordnet. Für jede Ansaugöffnung 3 ist eine korrespondierende Durchtrittsöffnung 18 vorgesehen. Die Ansaugöffnungen 3 und die Durchtrittsöffnungen 18 bewegen sich im Zuge eines Umlaufens des Fördergurtes 1 auf einer Längserstreckungsebene L des Unterdruckkanals 4 (vgl. insbesondere Fig. 1). Die Längserstreckungsebene L fällt mit der Spiegelachse S zusammen.

Aufgrund der symmetrischen Ausbildung des Fördergurtes 1 und der selbstzentrierenden Wirkung der Dichtlippen 6 wird während des Umlaufs des Fördergurtes 1 ein maximaler Überlapp des Unterdruckkanals 4 mit den Ansaugöffnungen 3 erzielt. Dies ist nicht nur im Hinblick auf zu vermeidende Leckagen wichtig, sondern auch in bezug auf erreichbare Taktzeiten beim Ansaugen und Abwerfen von Werkstücken.

Die Saugausformungen 7 sind im Ausführungsbeispiel als Saugnäpfe 7 mit innenseitigen Noppen 19 ausgebildet, wobei beschädigte Saugnäpfe 7 ausgetauscht und mittels einer Niet- oder Schraubverbindung am Gurtkörper 2 befestigt werden können. Die Noppen 19 sind ausweislich der Fig. 2 zur Begrenzung eines Federweges F des Saugnapfes 7 eingerichtet. Zusätzlich finden sich in den Saugnäpfen 7 Unterdruckfortsatzöffnungen 20 für die Ansaugöffnungen 3. Die Unterdruckfortsatzöffnungen 20 sind im Querschnitt T-förmig ausgebildet, wobei der Vertikalsteg 20a einen geringeren Durchmesser als die jeweilige Ansaugöffnung 3 und der Horizontalsteg 20b einen größeren Durchmesser als die korrespondierende Ansaugöffnung 3 aufweist. Auf diese Weise wird eine Erhöhung der Strömungsgeschwindigkeit im Bereich des Vertikalsteges 20a erreicht.

Der Gurtkörper 2 ist im allgemeinen aus PUR mit einer Shorehärte von ca. 90 gefertigt. Demgegenüber wird zur Fertigung der Dichtlippen und der Saugnäpfe 7 sowie der Noppen 19 größtenteils PUR mit einer Shorehärte von ca. 55 eingesetzt. Ausweislich der Fig. 2 weist der Gurtkörper 2 im Bereich seiner Kontaktfläche mit der Unterdruckvorrichtung 5 bzw. dem dortigen Führungskörper 11 eine PA-Beschichtung 2' zur Reibwertverminderung auf. Diese ist auf seiner der Unterdruckvorrichtung 5 zugewandten Rückseite im Bereich der vorgenannten Kontaktfläche mit der Unterdruckvorrichtung 5 vorgesehen. Zusätzlich kann der Gurtkörper 2 zur Stabilisierung in Längsrichtung eingebrachte Stahllitzen 21 aufweisen. Abgesehen davon können (nicht gezeigte) Querversteifungen und gegenbenenfalls (ebenfalls nicht dargestellte) ferromagnetische Einlagen in den Gurtkörper 2 eingebracht sein. Der Gurtkörper 2, die als U-Profil ausgebildeten Dichtlippen 6 und die Saugnäpfe 7 sind jeweils durch Kunststoffschweißverbindungen miteinander verbunden. Hierdurch läßt sich eine rationelle und genaue Fertigung erreichen. Selbstverständlich kann der Gurtkörper 2 auch ein Kunststoffgewebe aufweisen. In diesem Zusammenhang ist beispielsweise ein Belag aus einer Gewebeauflage denkbar.

Die gezeigte Unterdruckvorrichtung 5 bildet zusammen mit einer Magnetvorrichtung 22 insgesamt eine Haltevorrichtung, an welcher der Fördergurt 1 vorbeigeführt wird. Selbstverständlich läßt sich der Fördergurt 1 auch ausschließlich mit einer Unterdruckvorrichtung 5 oder der vorerwähnten Magnetvorrichtung 22 kombinieren. Jedenfalls ist nach dem Ausführungsbeispiel (vgl. Fig. 1) eine Haltevorrichtung aus zumindest einer Magnetvorrichtung 22 mit zumindest einem Magnetfördergurt 23 und die hiervon getrennte Unterdruckvorrichtung 5 mit dem erfindungsgemäßen Unterdruckfördergurt 1 vorgesehen. Die Magnetvorrichtung 22 und die Unterdruckvorrichtung 5 sind mit ihrem jeweiligen Fördergurt 1, 23 wechselweise in Kontakt mit den zu transportierenden Werkstücken bringbar. Dies ist im einzelnen nicht weiter dargestellt.

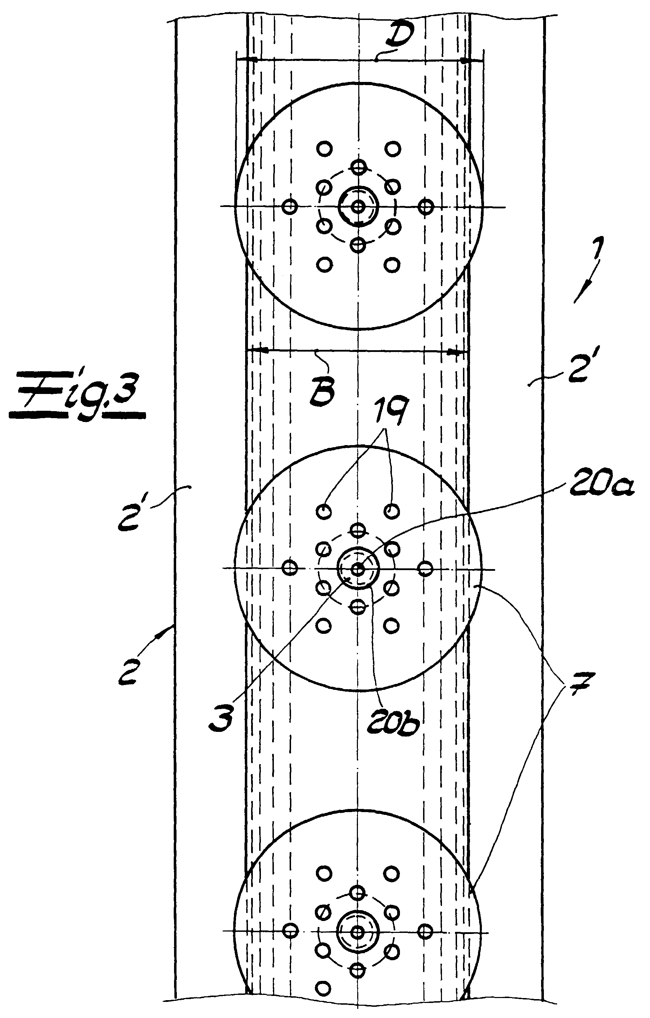

Ausweislich der Fig. 3 sind die Noppen 19 auf konzentrischen Kreisen um die Unterdruckfortsatzöffnung 20 angeordnet. Außerdem sind die Saugnäpfe 7 kreisförmig ausgebildet und weisen einen Durchmesser D auf, welcher größer als die Breite B des Gurtkörpers 2 ist. Auf diese Weise werden sogar Werkstücke bzw. Bleche oder Platten einwandfrei gehalten, deren Breite die Breite B des Gurtkörpers 2 um ein Mehrfaches übertrifft.

## Patentansprüche

1. Fördergurt (1) für den Transport von Werkstücken, insbesondere für den hängenden Transport von tafelförmigen Werkstücken wie Blechen oder Platten, mit einem Gurtkörper (2) mit Ansaugöffnungen (3), welche mit einem Unterdruckkanal (4) in einer Unterdruckvorrichtung (5) in Verbindung stehen, wobei der Fördergurt (1) mit den hieran anzulegenden Werkstücken an der Unterdruckvorrichtung (5) in Transportebenenrichtung (T) vorbeigeführt und die Werkstücke durch Erzeugen von Unterdruck in dem Unterdruckkanal (4) und damit an den Ansaugöffnungen (3) am Fördergurt (1) festgehalten werden, und mit zwei oder mehr an den Gurtkörper (2) angeformten rückseitigen Dichtlippen (6), wobei die Dichtlippen (6) zur Abdichtung des Unterdruckkanals (4) in zumindest einen Dichtspalt (9) in der Unterdruckvorrichtung (5) eingreifen, **dadurch gekennzeichnet**, daß
- für jede Dichtlippe (6) ein eigener Dichtspalt (9a, 9b) in der Unterdruckvorrichtung (5) vorgesehen ist, und daß
- die Dichtlippen (6), sich selbst zentrierend unter gleichzeitiger Abdichtung des Unterdruckkanals (4), in den Dichtspalten (9a, 9b) unter Vorspannung gehalten sind.

2. Fördergurt (1) nach Anspruch 1, dadurch gekennzeichnet, daß die beiden Dichtlippen (6) in bezug auf die Ansaugöffnungen (3) gegenüberliegend mit jeweils einwärts gerichteten Dichtzähnen (14) ausgebildet sind, und daß die Dichtzähne (14) jeweils in korrespondierende Einfasungen (15) im Dichtspalt (9a, 9b) eingreifen.

3. Fördergurt (1) nach Anspruch 1 oder 2, dadurch gekennzeichnet, daß jeder Dichtzahn (14) zwei als Dichtkante (14a) und Abschlußkante (14b) ausgebildete Zahnkanten (14a, 14b) aufweist, welche einen spitzen Winkel (α) zwischen sich einschließen, wobei die Dichtkante (14a) mit vorgegebenem Winkel (β) gegenüber der Transportebenenrichtung (T) an einer Dichtfasungskante (15a) der Einfasung (15) anliegt, welche ebenfalls eine vorgegebene Neigung (γ) gegenüber der Transportebenenrichtung (T) aufweist.

4. Fördergurt (1) nach einem der Ansprüche 1 bis 3, dadurch gekennzeichnet, daß der spitze Winkel (α) ca. 30° beträgt.

5. Fördergurt (1) nach einem er Ansprüche 1 bis 4, dadurch gekennzeichnet, daß die Dichtzähne (14) jeweils kopfseitig an einen auf dem Gurtkörper (2) rückseitig aufstehenden Dichtsteg (16) angeformt sind.

6. Fördergurt (1) nach einem der Ansprüche 1 bis 5, dadurch gekennzeichnet, daß die Dichtlippen (6) als an den Gurtkörper (2) angeformtes U-Profil ausgebildet sind, wobei jeder Dichtsteg (16) zusammen mit dem kopfseitigen Dichtzahn (14) einen U-Schenkel bildet, und wobei die beiden Dichtstege (16) fußseitig unter Bildung einer U-Basis mittels eines Auflagesteges (17) verbunden sind.

7. Fördergurt (1) nach einem der Ansprüche 1 bis 6, dadurch gekennzeichnet, daß der Auflagesteg (17) zumindest eine mittige Durchtrittsöffnung (18) aufweist, welche konzentrisch im Vergleich zur korrespondierenden Ansaugöffnung (3) im Gurtkörper (2) angeordnet ist, und daß die Dichtstege (16) mit den Dichtzähnen (14) im Vergleich zu der Durchtrittsöffnung (18) und der Ansaugöffnung (3) spiegelsymmetrisch angeordnet sind.

8. Fördergurt (1) nach einem der Ansprüche 1 bis 7, dadurch gekennzeichnet, daß für jede Ansaugöffnung (3) eine korrespondierende Durchtrittsöffnung (18) vorgesehen ist.

9. Fördergurt (1) nach einem der Ansprüche 1 bis 8, dadurch gekennzeichnet, daß sich die Ansaugöffnungen (3) und die Durchtrittsöffnungen (18) im Zuge eines Umlaufens des Fördergurtes (1) jeweils auf einer Längserstreckungsebene (L) des Unterdruckkanals (4) bewegen.

10. Fördergurt (1) nach einem der Ansprüche 1 bis 9, dadurch gekennzeichnet, daß frontseitige Saugausformungen (7) vorgesehen sind, in welche die Ansaugöffnungen (3) münden, wobei die Saugausformungen (7) als Saugnäpfe (7) mit innenseitigen Noppen (19) ausgebildet sind.

11. Fördergurt (1) nach einem der Ansprüche 1 bis 10, dadurch gekennzeichnet, daß die Noppen (19) zur Begrenzung des Federweges (F) des Saugnapfes (7) eingerichtet sind.

12. Fördergurt (1) nach einem der Ansprüche 1 bis 11, dadurch gekennzeichnet, daß die Saugnäpfe (7) Unterdruckfortsatzöffnungen (20) für die Ansaugöffnungen (3) aufweisen.

13. Fördergurt (1) nach einem der Ansprüche 1 bis 12, dadurch gekennzeichnet, daß der Gurtkörper (2) im wesentlichen aus PUR mit einer Shorehärte von 90 gefertigt ist.

14. Fördergurt (1) nach einem der Ansprüche 1 bis 13, dadurch gekennzeichnet, daß die Dichtlippen (6) und die Saugnäpfe (7) mit Noppen (19) größtenteils aus PUR mit einer Shorehärte von 55 gefertigt sind.

15. Fördergurt (1) nach einem der Ansprüche 1 bis 14, dadurch gekennzeichnet, daß der Gurtkörper (2) eine PA-Beschichtung (2') zur Reibwertverminderung auf seiner der Unterdruckvorrichtung (5) zugewandten Rückseite im Bereich einer Kontaktfläche mit der Unterdruckvorrichtung (5) aufweist.

16. Fördergurt (1) nach einem der Ansprüche 1 bis 15, dadurch gekennzeichnet, daß der Gurtkörper (2) zur Stabilisierung in Längsrichtung eingebrachte Stahllitzen (21) aufweist.

17. Fördergurt (1) nach einem der Ansprüche 1 bis 16, dadurch gekennzeichnet, daß der Gurtkörper (2) eingebrachte Querversteifungen und gegebenenfalls ferromagnetische Einlagen aufweist.

18. Fördergurt (1) nach einem der Ansprüche 1 bis 17, dadurch gekennzeichnet, daß der Gurtkörper (2) die Dichtlippen (6) und die Saugnäpfe (7) jeweils durch Schweißverbindungen miteinander verbunden sind.

## Claims

1. A conveyor belt (1) for the transport of workpieces, particularly for the suspended transport of platelike workpieces such as sheets or plates, comprising a belt body (2) with suction openings (3) which communicate with a vacuum channel (4) in a vacuum device (5), wherein the conveyor belt (1), with the workpieces to be placed thereon, is guided past the vacuum device (5) in the direction of the plane of transport (T) and the workpieces are secured to the conveyor belt (1) by the generation of a vacuum in the vacuum channel (4) and thus at the suction openings (3), and comprising two or more sealing lips (6) integrally formed on the back of the belt body (2), wherein the sealing lips (6) fit into at least one sealing aperture (9) in the vacuum device (5) in order to seal the vacuum channel (4), **characterised in that**
- a separate sealing aperture (9a, 9b) for each sealing lip (6) is provided in the vacuum device (5), and that
- the sealing lips (6) are held in the sealing apertures (9a, 9b) under an initial stress, and centre themselves with simultaneous sealing of the vacuum channel (4).

2. A conveyor belt (1) according to claim 1, characterised in that the two sealing lips (6) are of opposite construction, with inwardly directed sealing teeth (14) in each case, with respect to the suction openings (3), and that the sealing teeth (14) each fit into corresponding indentations (15) in the sealing aperture (9a, 9b).

3. A conveyor belt (1) according to claims 1 or 2, characterised in that each sealing tooth (14) has two tooth edges (14a, 14b) constructed as a sealing edge (14a) and as an end edge (14b), which form an acute angle (α) between them, wherein the sealing edge (14a) is seated, at a predetermined angle (β) to the direction of the plane of transport (T), against a sealing indentation border (15a) of the sealing indentation (15), which sealing indentation border likewise has a predetermined inclination (γ) in relation to the direction of the plane of transport (T).

4. A conveyor belt (1) according to any one of claims 1 to 3, characterised in that the acute angle (α) is about 30°.

5. A conveyor belt (1) according to any one of claims 1 to 4, characterised in that the sealing teeth (14) are each integrally formed at the top of a sealing projection (16) which protrudes from the back of the belt body (2).

6. A conveyor belt (1) according to any one of claims 1 to 5, characterised in that the sealing lips (6) are constructed as a U-shaped section integrally formed on the belt body (2), wherein each sealing projection (16) together with the sealing tooth (14) forms a limb of the U, and wherein the two sealing projections (16) are joined at their bases by means of a supporting crosspiece (17) forming the base of the U.

7. A conveyor belt (1) according to any one of claims 1 to 6, characterised in that the supporting crosspiece (17) has at least one central passageway opening (18) which is disposed concentrically with the corresponding suction opening (3) in the belt body (2), and that the sealing projections (16) with the sealing teeth (14) are disposed with mirror symmetry with respect to the passageway opening (18) and the suction opening (3).

8. A conveyor belt (1) according to any one of claims 1 to 7, characterised in that a corresponding passageway opening (18) is provided for each suction opening (3).

9. A conveyor belt (1) according to any one of claims 1 to 8, characterised in that in the course of a circulation of the conveyor belt (1) the suction openings (3) and the passageway openings (18) each move on a plane of longitudinal extent (L) of the vacuum channel (4).

10. A conveyor belt (1) according to any one of claims 1 to 9, characterised in that suction formations (7), into which the suction openings (3) lead, are provided on the front side, wherein the suction formations (7) are constructed as a suction cups (7) with studs (19) on their inner faces.

11. A conveyor belt (1) according to any one of claims 1 to 10, characterised in that the studs (19) are designed to limit the resilient travel (F) of the suction cup (7).

12. A conveyor belt (1) according to any one of claims 1 to 11, characterised in that the suction cups (7) comprise vacuum extension openings (20) for the suction openings (3).

13. A conveyor belt (1) according to any one of claims 1 to 12, characterised in that the belt body (2) is substantially made of PUR with a Shore hardness of 90.

14. A conveyor belt (1) according to any one of claims 1 to 13, characterised in that the sealing lips (6), and the suction cups (7) with the studs (19), are substantially made of PUR with a Shore hardness of 55.

15. A conveyor belt (1) according to any one of claims 1 to 14, characterised in that on its back side facing the vacuum device (5), in the region of a contact face with the vacuum device (5), the belt body (2) comprises a PA coating (2') to reduce the coefficient of friction.

16. A conveyor belt (1) according to any one of claims 1 to 15, characterised in that the belt body (2) comprises incorporated steel cords (21) for stabilisation in the longitudinal direction.

17. A conveyor belt (1) according to any one of claims 1 to 16, characterised in that the belt body (2) comprises incorporated transverse stiffeners and optionally comprises ferromagnetic inserts.

18. A conveyor belt (1) according to any one of claims 1 to 17, characterised in that the belt body (2), the sealing lips (6) and the suction cups (7) are each attached to each other by weld joints.

## Revendications

1. Bande de convoyage (1) pour le transport de pièces, en particulier pour le transport en suspension de pièces en forme de feuilles comme des tôles ou des plaques, comprenant un corps formant bande (2) pourvu d'ouvertures d'aspiration (3) qui communiquent avec un canal à pression négative (4) situé dans un dispositif à pression négative (5), la bande de convoyage (1) garnie des pièces à y appliquer défilant devant le dispositif à pression négative (5) dans le sens du plan de transport (T), et les pièces étant plaquées contre la bande de convoyage (1) par la production de pression négative dans le canal à pression négative (4) et donc au niveau des ouvertures d'aspiration (3), et comprenant deux ou plusieurs lèvres d'étanchéité postérieures (6) surmoulées sur le corps formant bande (2), les lèvres d'étanchéité (6) pénétrant dans au moins un interstice d'étanchéité (9) du dispositif à pression négative (5) pour étancher le canal à pression négative (4), caractérisée en ce que
- un interstice d'étanchéité propre (9a, 9b) est prévu pour chaque lèvre d'étanchéité (6) dans le dispositif à pression négative (5), et en ce que
- les lèvres d'étanchéité (6) sont maintenues sous précontrainte dans les interstices d'étanchéité (9a, 9b) en se centrant d'elles-mêmes tout en étanchant le canal à pression négative (4).

2. Bande de convoyage (1) selon la revendication 1, caractérisée en ce que, par rapport aux ouvertures d'aspiration (3), les deux lèvres d'étanchéité (6) se font face et sont pourvues chacune d'une dent d'étanchéité (14) orientée vers l'intérieur, et en ce que les dents d'étanchéité (14) pénètrent chacune dans une partie biseautée correspondante (15) ménagée dans l'interstice d'étanchéité (9a, 9b).

3. Bande de convoyage (1) selon la revendication 1 ou 2, caractérisée en ce que chaque dent d'étanchéité (14) comporte deux flancs de dent (14a, 14b) qui sont configurés en flanc d'étanchéité (14a) et en flanc de recouvrement (14b) et qui forment entre eux un angle aigu (α), le flanc d'étanchéité (14a) étant appliqué contre le flanc biseauté d'étanchéité (14a) de la partie biseautée (15) avec un angle prédéfini (β) par rapport au sens du plan de transport (T), ledit flanc biseauté d'étanchéité (15a) présentant lui aussi une inclinaison prédéfinie (γ) par rapport au sens du plan de transport (T).

4. Bande de convoyage (1) selon l'une des revendications 1 à 3, caractérisée en ce que l'angle aigu (α) est d'environ 30°.

5. Bande de convoyage (1) selon l'une des revendications 1 à 4, caractérisée en ce que les dents d'étanchéité (14) sont chacune surmoulées sur la partie de tête d'une nervure d'étanchéité (16) disposée verticalement sur la face arrière du corps formant bande (2).

6. Bande de convoyage (1) selon l'une des revendications 1 à 5, caractérisée en ce que les lèvres d'étanchéité (6) sont configurées en profilé en U surmoulé sur le corps formant bande (2), chaque nervure d'étanchéité (16) formant une branche du U avec la dent d'étanchéité (14) située côté tête, et les deux nervures d'étanchéité (16) étant reliées côté pied par une nervure d'appui (17) en formant la base du U.

7. Bande de convoyage (1) selon l'une des revendications 1 à 6, caractérisée en ce que la nervure d'appui (17) est pourvue d'au moins une ouverture débouchante centrale (18) qui est disposée de manière concentrique par rapport à l'ouverture d'aspiration correspondante (3) du corps formant bande (2), et en ce que les nervures d'étanchéité (16) munies des dents d'étanchéité (14) sont disposées selon une symétrie en miroir par rapport à l'ouverture débouchante (18) et à l'ouverture d'aspiration (3).

8. Bande de convoyage (1) selon l'une des revendications 1 à 7, caractérisée en ce que pour chaque ouverture d'aspiration (3) est prévue une ouverture débouchante correspondante (18).

9. Bande de convoyage (1) selon l'une des revendications 1 à 8, caractérisée en ce qu'au cours de la rotation de la bande de convoyage (1) les ouvertures d'aspiration (3) et les ouvertures débouchantes (18) se déplacent respectivement sur un plan d'extension longitudinale (L) du canal à pression négative (4).

10. Bande de convoyage (1) selon l'une des revendications 1 à 9, caractérisée en ce qu'il est prévu des structures frontales d'aspiration (7) dans lesquelles débouchent les ouvertures d'aspiration (3), les structures d'aspiration (7) étant configurées en ventouses (7) pourvues de plots intérieurs (19).

11. Bande de convoyage (1) selon l'une des revendications 1 à 10, caractérisée en ce que les plots (19) sont conçus pour limiter la course élastique (F) de la ventouse (7).

12. Bande de convoyage (1) selon l'une des revendications 1 à 11, caractérisée en ce que les ventouses (7) sont pourvues d'ouverture de prolongation sous pression négative (20) pour les ouvertures d'aspiration (3).

13. Bande de convoyage (1) selon l'une des revendications 1 à 12, caractérisée en ce que le corps formant bande (2) est fabriqué pour l'essentiel en polyuréthanne avec une dureté Shore de 90.

14. Bande de convoyage (1) selon l'une des revendications 1 à 13, caractérisée en ce que les lèvres d'étanchéité (6) et les ventouses (7) garnies de plots (19) sont fabriquées en majeure partie en polyuréthanne avec une dureté Shore de 55.

15. Bande de convoyage (1) selon l'une des revendications 1 à 14, caractérisée en ce que, sur sa face arrière tournée vers le dispositif à pression négative (5), le corps formant bande (2) comporte un revêtement en polyamide (2') pour réduire le coefficient de friction dans la zone d'une surface de contact avec le dispositif à pression négative (5).

16. Bande de convoyage (1) selon l'une des revendications 1 à 15, caractérisée en ce que le corps formant bande (2) comporte des torons en acier (21) incorporés pour le stabiliser dans la direction longitudinale.

17. Bande de convoyage (1) selon l'une des revendications 1 à 16, caractérisée en ce que le corps formant bande (2) comporte des moyens de renfort transversaux et éventuellement des garnitures ferromagnétiques incorporés.

18. Bande de convoyage (1) selon l'une des revendications 1 à 17, caractérisée en ce que le corps formant bande (2), les lèvres d'étanchéité (6) et les ventouses (7) sont reliés entre eux par des liaisons soudées.
